# EUROPÄISCHE PATENTSCHRIFT

(11) **EP 1 918 546 B1**
(45) Veröffentlichungstag und Bekanntmachung des Hinweises auf die Patenterteilung: **19.10.2011**
(21) Anmeldenummer: 07114871.2
(22) Anmeldetag: 23.08.2007
(51) Int. Cl.: F02B 29/04

(54) **Ladeluftkühler für eine Hubkolbenbrennkraftmaschine**
Charge air cooler for a stroke piston combustion engine
Refroidisseur d'air de suralimentation pour un moteur à combustion à piston élévateur

(30) Priorität: 30.10.2006 EP 06123180
(43) Veröffentlichungstag der Anmeldung: 07.05.2008
(73) Patentinhaber: Wärtsilä Schweiz AG, 8401 Winterthur (CH)
(72) Erfinder: Schulz, Reiner, Dr., 8408, Winterthur (CH)
(74) Vertreter: Sulzer Management AG

(56) Entgegenhaltungen:
- WO-A-88/06679
- DE-A1- 3 338 273
- DE-A1- 3 935 789
- DE-A1- 19 923 013
- DE-C1- 19 855 991

## Beschreibung

Die Erfindung betrifft einen Ladeluftkühler für eine Hubkolbenbrennkraftmaschine, insbesondere für einen Zweitakt Grossdieselmotor gemäss dem Oberbegriff des unabhängigen Anspruchs 1.

Zur Leistungssteigerung von Hubkolbenbrennkraftmaschinen, wie zum Beispiel von Grossdieselmotoren für Schiffe oder stationäre Anlagen zur Erzeugung elektrischer Energie, wird nach einem Verbrennungstakt die Frischluft mittels einer Aufladegruppe, die in der Regel als Abgasturbolader ausgelegt ist, unter erhöhtem Druck in den Brennraum eines Zylinders eingebracht. Dabei kann ein Teil der thermischen Energie der Abgase ausgenutzt werden, die den Brennraum des Zylinders nach dem Verbrennungstakt verlassen. Dazu werden die heissen Abgase durch Öffnen eines Auslassventils aus dem Brennraum des Zylinders der Aufladegruppe zugeführt. Die Aufladegruppe besteht im wesentlichen aus einer Turbine, die durch die unter Druck in die Aufladegruppe eintretenden heissen Abgase angetrieben wird. Die Turbine treibt ihrerseits einen Verdichter an, wodurch Frischluft angesaugt und verdichtet wird. Den Verdichter mit Turbine, eine Anordnung, die häufig auch einfach als Turbolader bezeichnet wird und insbesondere, aber nicht nur, im Fall von Zweitakt Grossdieselmotoren als ein Radialverdichter verwendet, ist ein sogenannter Diffusor, ein Ladeluftkühler, ein Wasserabscheider und ein Einlassreceiver nachgeschaltet, von wo aus die komprimierte Frischluft, auch als Ladeluft oder Spülluft bezeichnet, schliesslich in die einzelnen Brennräume der Zylinder des Grossdieselmotors eingespeist wird. Durch den Einsatz einer solchen Aufladegruppe kann somit die Frischluftzufuhr erhöht und die Effizienz des Verbrennungsvorgangs im Brennraum des Zylinders gesteigert werden.

Im Fall von Grossdieselmotoren erfolgt, je nach Typ, die Einspeisung der Luft an unterschiedlichen Stellen am Zylinder. So wird beispielsweise bei längs gespülten Zweitakt-Motoren die Luft über Spülschlitze, die in der Lauffläche im unteren Bereich des Zylinders angeordnet sind, in den Brennraum des Zylinders eingebracht. Bei Viertakt-Motoren wird die Ladeluft in der Regel über ein oder mehrere Einlassventile, die im Zylinderdeckel angeordnet sind, in den Brennraum des Zylinders eingebracht. Dabei sind durchaus auch Zweitakt-Motoren bekannt, die an Stelle von Spülschlitzen im unteren Bereich des Zylinders mit Einlassventilen im Zylinderdeckel ausgerüstet sind.

Eine zentrale Bedeutung für die Frischluftversorgung der Zylinder kommt dabei dem oben bereits erwähnten Ladeluftkühler zu. Wie dem Fachmann wohlbekannt ist, handelt es sich bei den bekannten Ladeluftkühlern um ein im wesentlichen quaderförmiges Gehäuse, in welchem Kühlpakete untergebracht sind, die die Ladeluft vom Eingang des Ladeluftkühlers zum Ausgang des Ladeluftkühlers zur Kühlung der Ladeluft durchströmt. Die Ladeluft wird dabei massiv abgekühlt, typischerweise z.B. von 250°C auf 50°C, so dass neben der Kühlung der Luft im Ladeluftkühler auch Wasser aus der Ladeluft im Ladeluftkühler kondensiert.

WO-A-88/06679 beschreibt einen Verbrennungsmotor mit Abgasturbolader enthaltend ein Ladeluftkühler mit Kondenswasserabscheidung. Der Ladeluftkühler enthält eine Vielzahl senkrecht verlaufender und parallel zueinander angeordneter Kühlkanäle, wobei die zu kühlende Ladeluft oben eingespeist und unten weggeführt und dann über einen Kondenswasserabscheider in den Verbrennungsraum eingeleitet wird. Der Kondenswasserabscheider ist dem Ladeluftkühler nachgeschaltet und enthält ein Drahtgeflecht zur Abscheidung von Kondenswasser aus der gekühlten Ladeluft, wobei das abgeschiedene Kondenswasser mittels einem Abflussrohr aus dem Ladeluftkreislauf abgeführt wird.

Bei Schiffsmotoren fällt insbesondere unter tropischen Bedingungen ein erheblicher Teil der Luftfeuchtigkeit bereits im Ladeluftkühler aus, weil die Motoren mit erheblichen Ladeluftdrücken betrieben, d.h. aufgeladen werden.

Dieses Kondensat soll möglichst nicht in den Receiver des Motors gelangen, sondern bereits vorher möglichst vollständig abgeleitet werden. Zu diesem Zweck werden bekanntermassen Anordnungen wie "Underslungs" sowie Wasserabscheider verwendet, wodurch ein erheblicher Teil des flüssigen Kondenswassers abgeführt werden kann.

Die Ladeluftkühler werden dabei in der Regel aus Fertigungsgründen aus mehreren Teilen zusammengebaut, normalerweise aus zwei bis vier Kühlpaketen, die z.B. jeweils eine Höhe von ca. 40cm haben. Die Kühlpakete bestehen aus Kühlblechen, an denen die Ladeluft in Richtung vom Ladekühlereingang zum Ladekühlerausgang vorbeiströmt, wobei senkrecht zu und durch die Oberfläche der Kühlbleche eine Vielzahl von Wasser durchströmten Kühlrohre verlaufen, um die Effizienz der Kühlung der Ladeluft zu erhöhen. Der Ablauf und Zulauf des Kühlwassers zu den Kühlrohren erfolgt dabei bevorzugt in bekannter Weise von ein und derselben Seite, um Spannungen im Ladeluftkühler aufgrund thermischer Dehnungen zu vermeiden.

Typische Ladeluftkühler für Grossdieselmotoren haben in Durchströmrichtung der Ladeluft eine Länge von ca. 70cm, eine Höhe von ca. 1,6m und eine Breite, in der sich die Kühlrohre erstrecken, von ca. 2m - 2,5m. Die bevorzugt horizontal verlaufenden Kühlrohre haben einen Durchmesser von typischerweise 10mm und können in einem Abstand von 15mm - 30mm angeordnet sein. Die Kühlbleche, die sich im wesentlichen parallel zur Durchströmrichtung der Ladeluft in vertikaler Richtung erstrecken, so dass das daran aus der Ladeluft kondensierte Kondenswasser durch die Schwerkraft in der vertikalen Richtung nach unten ablaufen kann, sind z.B. in einem Abstand von 2mm zueinander angeordnet, wobei die Kühlbleche in der Regel eher als Kühlfolien bezeichnet werden müssen, da sie meist eine Stärke von nur ca. 0,1 mm bis 0,2mm aufweisen.

Es versteht sich, dass je nach Typ des Ladeluftkühlers die oben lediglich beispielhaft gegebenen Dimensionen und Angaben auch stark abweichen können.

Zwischen den Kühlpaketen bleibt ein Luftspalt, der sich von den Vibrationen des Motors angeregten Schwingungen der Kühlrohrpakete, also der Kühlpakete, periodisch öffnet und schliesst. Aufgrund des Druckverlusts im Ladeluftkühler entstehen in diesem Spalt erhebliche Luftgeschwindigkeiten, wodurch das Kondensat mitgerissen wird, d.h. in den anschliessenden Wasserabscheider weitergeführt wird, und dadurch im Ladeluftkühler nicht vorab abgeschieden werden kann. Durch die durch die Schwingungen hervorgerufenen lokalen Geschwindigkeitsmaxima kann die Arbeitsweise des Wasserabscheiders sogar verunmöglicht werden.

Insbesondere auch dadurch, dass die Kühlbleche in einem sehr kurzen Abstand von ca. 2mm zueinander angeordnet sind, sammelt sich sehr schnell eine relativ dicke Schicht aus Kondenswasser an der Oberfläche der Kühlbleche, die aufgrund der Oberflächenspannung rasch z.B. zu Tropfen von erheblicher Grösse, die grösser als der Abstand der Kühlbleche sein kann, anwachsen, so dass das Kondenswasser nur noch ungenügend an den Kühlblechen ablaufen kann und daher vom durchströmenden Ladeluftstrom in den Wasserabscheider mitgerissen wird. Dieser Effekt wird noch dadurch verstärkt, dass durch Vibrationen der Kühlbleche das daran kondensierte Kondenswasser relativ leicht abgelöst werden kann, so dass es vom Luftstrom mitgerissen werden kann.

Insbesondere bei Motoren, die horizontal durchströmte Kühler verwenden, tritt somit zwar ein bestimmter Teil des Kondensats bereits im Ladeluftkühler aus, ohne den Wasserabscheider zu benetzen. Dieser Effekt hat sich im Prinzip als sehr positiv erwiesen, ist jedoch bei den bekannten Ladeluftkühlern aus den oben geschilderten Gründen bisher zu wenig stark ausgeprägt, d.h. bei den bekannten Ladeluftkühlern gelangt immer noch zu viel Kondenswasser, das aus der Ladeluft abgeschieden wurde, in den Wasserabscheider.

So werden in den bekannten Ladeluftkühlern z.B. lediglich ca. 80% oder weniger des Kondensats abgeschieden, während der Rest, also z.B. die verbleibenden 20% in den Wasserabscheider mitgerissen werden.

Der Umstand, dass ein bestimmter Teil des Kondenswassers aus dem Ladeluftkühler in den Wasserabscheider mitgerissen wird stellt für sich noch kein Problem dar. Das eigentliche Problem ist nämlich der Wasserabscheider, der aufgrund seines Aufbaus und seiner Funktionsweise bekanntermassen nur sehr unzuverlässig arbeitet, d.h. dass die Abscheidungsrate im Wasserabscheider nicht ausreichend hoch ist, so dass trotz Wasserabscheider noch eine nicht vertretbar grosse Menge an Kondenswasser in den nach geschalteten Receiver des Motors und damit in den Zylinder der Hubkolbenbrennkraftmaschine gelangt, was negative Folgen hat.

Ein Grund dafür, dass die Wasserabscheider einen so unzureichenden Wirkungsgrad haben, liegt darin, dass das Kondenswasser dadurch abgeschieden wird, dass der das Kondenswasser tragende Ladeluftstrom im Wasserabscheider durch entsprechende Bleche umgeleitet wird, so dass sich das Kondenswasser an den Blechen abscheiden und nach unten ablaufen kann, und so aus dem Ladeluftstrom entfernt wird. Allerdings wird das Kondenswasser nur durch die relativ schwachen Adhäsionskräfte an den Oberflächen der Bleche gehalten. Insbesondere durch Vibrationen im Betriebszustand können sich z.B. einzelne Tropfen sehr leicht von den Blechen ablösen, werden dadurch vom Ladeluftstrom wieder mitgerissen und gelangen dann doch in den Receiver und schliesslich in den Zylinder des Motors.

Die Aufgabe der Erfindung ist es daher, einen verbesserten Ladeluftkühler für eine Hubkolbenbrennkraftmaschine, insbesondere für einen Zweitakt Grossdieselmotor vorzuschlagen, mit welchem im Vergleich zu den bekannten Ladeluftkühlern eine deutlich höhere Menge an Kondenswasser abgeschieden werden kann, so dass die Menge an Kondenswasser aus der Ladeluft, die in den nach geschalteten Wasserabscheider gelangt, deutlich verringert werden kann.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit einen Ladeluftkühler für eine Hubkolbenbrennkraftmaschine, insbesondere Zweitakt Grossdieselmotor, wobei der Ladeluftkühler ein sich von einem Kühlereingang zu einem Kühlerausgang entlang einer Längsachse erstreckendes Kühlergehäuse mit einem im Inneren des Kühlergehäuses angeordneten Kühlpaket umfasst, und der Kühlereingang mit einem Ausgang eines Diffusors und der Kühlerausgang mit einem Wasserabscheider der Hubkolbenbrennkraftmaschine verbindbar ist, so dass im Betriebszustand der Hubkolbenbrennkraftmaschine aus einem Abgasturbolader Frischluft als Ladeluft über den Diffusor in den Ladeluftkühler einbringbar ist. Erfindungsgemäss umfasst der Ladeluftkühler zur Kühlung der Ladeluft und zum Abscheiden von Kondenswasser aus der Ladeluft mindestens zwei Kühlpakete, die durch eine Ablaufeinrichtung zur Abführung des Kondenswassers aus dem Ladeluftkühler voneinander getrennt sind.

Es hat sich nämlich gezeigt, dass sich die Menge an Kondenswasser, die bereits im Ladeluftkühler aus der Ladeluft abgeschieden wird, deutlich erhöhen lässt, wenn zwischen den Kühlerpaketen eine Ablaufeinrichtung für das in den Kühlpaketen abgeschiedene Kondenswasser vorgesehen wird.

Dadurch wird nämlich erreicht, dass das in den Kühlpaketen abgeschiedene Kondenswasser aus jedem Kühlpaket separat abgeführt werden kann, so dass Kondenswasser, das z.B. an einem ganz oben im Ladeluftkühler angeordneten Kühlpaket abgeschieden wird, bei seinem Weg nach unten nicht mehr die gesamte Höhe des Luftstroms durch den Ladeluftkühler nach unten durchfallen bzw. dürchfliessen muss, da es von der Ablaufeinrichtung bereits nach einem relativ kurzen Laufweg oder Fallweg im Schwerkraftfeld der Erde gesammelt wird und aus dem Ladeluftkühler abgeführt wird.

D.h., ein wesentlicher Effekt der vorliegenden Erfindung ist eine Verkürzung des Laufwegs bzw. der Verweildauer des an den Kühlblechen abgeschiednen Kondenswassers im Ladeluftkühler.

Somit gelangt deutlich weniger Kondensat wieder in den Ladeluftstrom zurück, so dass durch die Erfindung die Abscheidemenge an Kondenswasser in einem erfindungsgemässen Ladeluftkühler massiv erhöht wird, dadurch deutlich weniger Kondenswasser im nachfolgenden Wasserabscheider abgeschieden werden muss, so dass praktisch kein Kondenswasser mehr in den Zylinder und damit in den Brennraum der Hubkolbenbrennkraftmaschine gelangt.

Das heisst, dadurch dass zwischen den Kühlerpaketen Ablaufeinrichtungen, im speziellen Ablaufwannen integriert sind, die das Kondensat auffangen, und zur kalten Seite des Ladeluftkühlers abführen, wird die im Ladeluftkühler abscheidbare Menge an Kondenswasser massiv erhöht. Ausserdem wirken die Ablaufeinrichtungen gleichzeitig als Versteifung der Kühlpakete. Aufgrund einer federnden Wirkung werden die Kühlpakete verspannt und der Luftspalt dazwischen wird klein gehalten bzw. entfällt ganz.

In einem für die Praxis besonders wichtigen Ausführungsbeispiel umfasst das Kühlpaket eines erfindungsgemässen Ladeluftkühlers in an sich bekannter Weise eine von einer Kühlflüssigkeit durchströmte Kühlleitung und / oder das Kühlpaket umfasst zur Kühlung der Ladeluft und zum Abscheiden von Kondenswasser ein Kühlblech, an welchem Kondenswasser aus der Ladeluft kondensieren und in die Ablaufeinrichtung ablaufen kann.

Bevorzugt ist die Ablaufeinrichtung als Ablaufblech, insbesondere als Ablaufwanne, im Speziellen umfassend eine Ablaufrinne, ausgebildet, so dass das Kondenswasser, z.B. über die Ablaufrinne aus dem Kühlpaket zuverlässig ausbringbar ist und somit nicht z.B. ein darunter liegendes Kühlpaket auch noch passieren muss, so dass ausgeschlossen ist, dass dieser Anteil des Kondenswasser durch den Teil der Ladeluft, die durch das darunter liegende Kühlpaket strömt, wieder mitgerissen wird und in den Wasserabscheider gelangt.

In einem speziellen Fall kann die Ablaufeinrichtung auch als zumindest einseitig perforiertes Hohlblech ausgebildet sein, so dass das Kondenswasser, das in einem über dem perforierten Hohlblech angeordneten Kühlpaket abgeschiedene Kondenswasser durch Öffnungen, die die Perforation im Hohlblech bilden, ins Innere des Hohlblechs abfliessen kann und durch geeignete Mittel, z.B. durch vertikale Ablaufrohre, aus dem Ladeluftkühler abführbar ist.

Alternativ kann die Ablaufeinrichtung auch als Ablaufschwamm und / oder Ablaufschaum, insbesondere in Form eines metallischen Ablaufschwamms und / oder Ablaufschaums ausgebildet sein, der das abgeschiedene Kondenswasser aufnimmt und / oder aus dem das Kondenswasser z.B. durch geeignete Absaugmittel abgesaugt und so aus dem Ladeluftkühler heraus transportierbar ist.

Um ein besseres Ablaufen des Kondenswassers zu ermöglichen, kann die Ablaufeinrichtung in Bezug auf die Längsachse unter einem vorgebbaren Winkel geneigt sein, so dass aufgrund der Wirkung der Schwerkraft das Kondenswasser schneller und zuverlässiger aus dem Ladeluftkühler abführbar ist.

Wie bereits erwähnt, kann zur Absaugung des Kondenswassers aus der Ablaufeinrichtung auch zusätzlich eine geeignete Absaugvorrichtung vorgesehen sein, wobei in einem bevorzugten Ausführungsbeispiel die Absaugvorrichtung zur Erzeugung eines Unterdrucks mit einem Eingang des Diffusors, in welchem relativ zum Ladeluftkühler ein Unterdruck herrscht, verbunden sein kann und / oder die Absaugeinrichtung kann z.B. auch, oder zusätzlich, mit einer Saugpumpe verbunden sein, mit der das Kondenswasser aus dem Ladeluftkühler absaugbar ist.

Dabei kann das Kühlergehäuse und / oder das Kühlpaket trapezförmig, insbesondere ausgangsseitig trapezförmig ausgestaltet sein, wodurch die Menge an Kondenswasser, die bereits im Ladeluftkühler abscheidbar ist, nochmals erhöht werden kann, da durch die trapezförmige Ausgestaltung der Laufweg, auf dem Kondenswasser im Ladeluftkühler ausgeschieden werden kann, erhöht ist.

Die Erfindung wird im Folgenden an Hand der schematischen Zeichnung näher erläutert. Es zeigen:
- Fig. 1: Schematisch den prinzipiellen Aufbau eines Abgasturbolader Systems;
- Fig. 2: ein erstes Ausführungsbeispiel eines erfindungsgemässen Ladeluftkühlers;
- Fig. 3: einen Schnitt entlang der Schnittlinie I-I gemäss Fig. 2;
- Fig. 4: ein zweites Ausführungsbeispiel eines erfindungsgemässen Ladeluftkühlers mit Ablaufwanne;
- Fig. 5: ein drittes Ausführungsbeispiel eines erfindungsgemässen Ladeluftkühlers mit perforiertem Hohlblech;
- Fig. 6: ein viertes Ausführungsbeispiel eines erfindungsgemässen Ladeluftkühlers mit Ablaufschwamm und Absaugvorrichtung;
- Fig. 7: ein fünftes Ausführungsbeispiel eines erfindungsgemässen Ladeluftkühlers mit einer Umlenkung mit Zyklonwirkung;
- Fig. 8: ein erfindungsgemässer Ladeluftkühler mit trapezförmigem Kühlpaket;

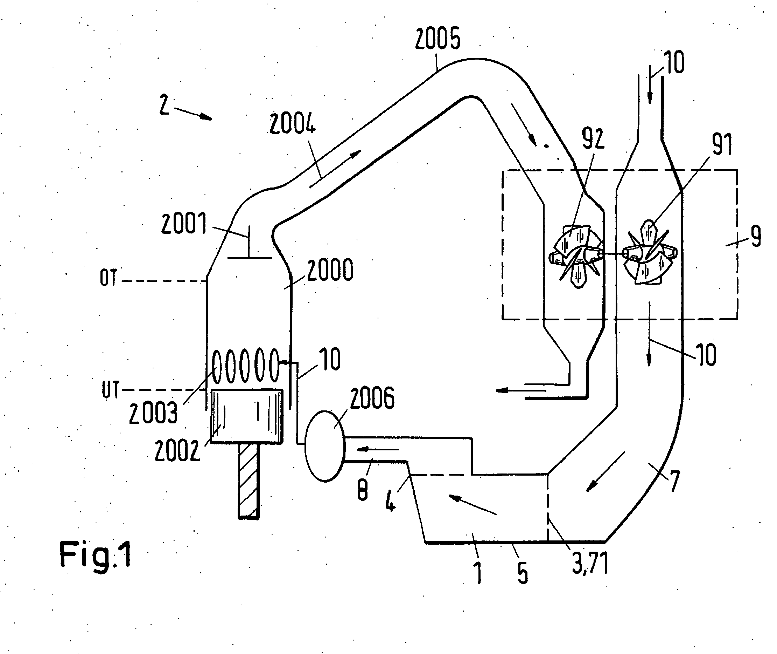

Fig. 1 zeigt in einer schematischen Darstellung zur Erläuterung des Zusammenwirkens der unterschiedlichen Komponenten den prinzipiellen Aufbau eines Abgasturbolader Systems eines Grossdieselmotors, der als Zweitakt-Grossdieselmotor mit Längsspülung ausgebildet und mit einem erfindungsgemässen Ladeluftkühler ausgestattet ist, der im folgenden gesamthaft mit dem Bezugszeichen 1 bezeichnet wird.

Der Grossdieselmotor 2 umfasst in an sich bekannter Weise üblicherweise mehrere Zylinder 2000 mit einem in einem Zylinderdeckel angeordneten Auslassventil 2001, in welchem Zylinder 2000 ein Kolben 2002 zwischen einem unteren Totpunkt UT und einem oberen Totpunkt OT entlang einer Lauffläche hin- und herbewegbar angeordnet ist. Die Zylinderwände des Zylinders 2000 mit Zylinderdeckel und der Kolben 2002 begrenzen in bekannter Weise einen Brennraum des Zylinders 2000. Im unteren Bereich des Zylinders 2000 sind mehrere Spülluftöffnungen 2003 vorgesehen, die als Spülschlitze 2003 ausgeführt sind. Je nach Stellung des Kolbens 2002 werden die Spülschlitze 2003 von diesem überdeckt oder freigegeben. Durch die Spülluftöffnungen 2003 kann die als Spülluft 10 bezeichnete Ladeluft 10 in den Brennraum des Zylinders 2000 einströmen. Durch das im Zylinderdeckel angeordnete Auslassventil 2001 strömen die bei der Verbrennung entstandenen Abgase 2004 durch eine Abgasleitung 2005, die sich an das Auslassventil 2001 anschliesst, in einen Abgasturbolader 9.

Der Abgasturbolader 9 umfasst als wesentliche Komponenten in an sich bekannter Weise einen Verdichter mit Verdichterlaufrad 91 zum Verdichten von Luft 10, sowie eine Turbine mit einem Turbinenlaufrad 92 zum Antreiben des Verdichterlaufrads 91, das durch eine Welle in bekannter Weise wirkfest mit dem Turbinenlaufrad 92 verbunden ist. Die Turbine und der Verdichter sind in einem Gehäuse angeordnet und bilden den Abgasturbolader 9, der im vorliegenden Fall verdichterseitig als Radialverdichter ausgebildet ist. Die Turbine wird in bekannter Weise durch die einströmenden heissen Abgase 2004 aus dem Brennraum des Zylinders 2000 angetrieben.

Zum Beschicken des Brennraums des Zylinders 2000 mit Ladeluft 10 wird durch das Verdichterlaufrad 91 über einen Ansaugstutzen Frischluft 10 angesaugt und im Abgasturbolader 9 komprimiert. Aus dem Abgasturbolader 9 gelangt die komprimierte Frischluft 10 als Ladeluft 10 durch den nachgeschalteten Diffusor 7 und den erfindungsgemässen Ladeluftkühler 1 über den Wasserabscheider 8 in einen Einlassreceiver 2006, von dem aus die komprimierte Ladeluft 10 schliesslich als Spülluft 10 durch die Spülschlitze 2003 unter erhöhtem Druck in den Brennraum des Zylinders 2000 gelangt.

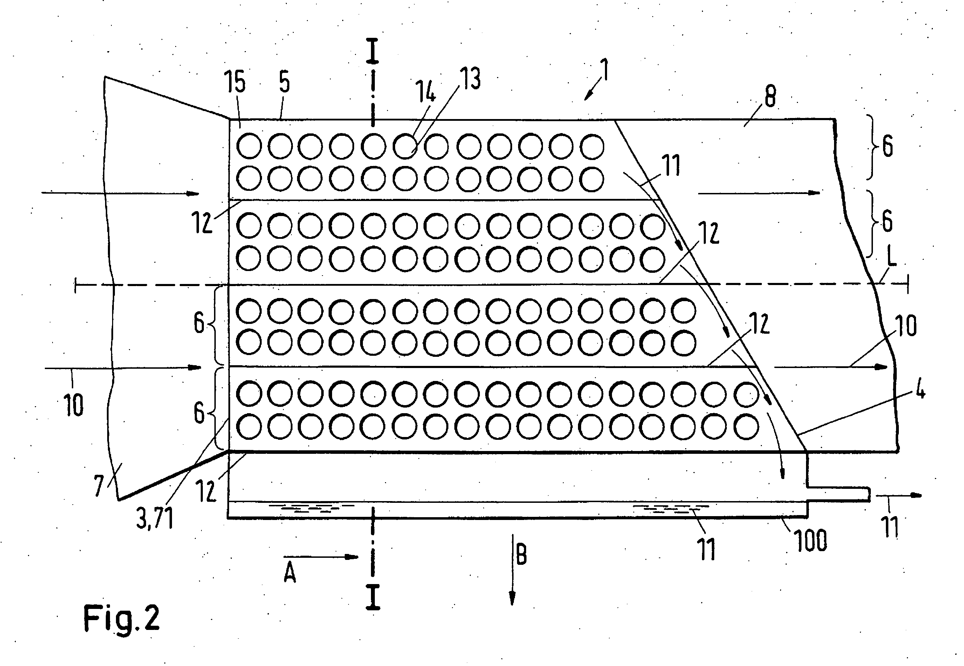

In Fig. 2 ist ein erstes einfaches Ausführungsbeispiel eines erfindungsgemässen Ladeluftkühlers 1 im Längsschnitt schematisch dargestellt. Das Kühlergehäuse 5 des erfindungsgemässen Ladeluftkühlers 1 gemäss Fig. 2 erstreckt sich entlang der Längsachse L vom Kühlereingang 3 zum Kühlerausgang 4. Der Kühlereingang 3 wird im Betriebszustand der Hubkolbenbrennkraftmaschine 2 aus einem Diffusor 7 mit Ladeluft 10 beschickt, die den Ladeluftkühler 1 über den Kühlerausgang 4 in einen Wasserabscheider 8 wieder verlässt.

Im Inneren des Kühlergehäuses 5 sind im vorliegenden Beispiel vier Kühlpakete 6 übereinander angeordnet, die eine Vielzahl von einer Kühlflüssigkeit 13 durchströmte Kühlleitungen 14 umfasst, die in an sich bekannter Weise senkrecht durch und senkrecht zu Kühlblechen 15 angeordnet sind. Erfindungsgemäss umfasst der Ladeluftkühler 1 eine Ablaufeinrichtung 12 zur Abführung von Kondenswasser 11, die jeweils zwischen zwei Kühlpakten 6 angeordnet sind und diese voneinander trennt. Wie in Fig. 2 schematisch durch die Pfeile 11 angedeutet, wird in diesem ganz einfachen Ausführungsbeispiel das in den Kühlpakten abgeschiedene Kondenswasser 11 durch die wirkende Schwerkraft, die, wie durch den entsprechenden Pfeil B gekennzeichnet, in Richtung B wirkt, in ein Sammelbecken 100 am unteren Ende des erfindungsgemässen Ladeluftkühlers 1 abgeleitet und von dort nach aussen abgeführt.

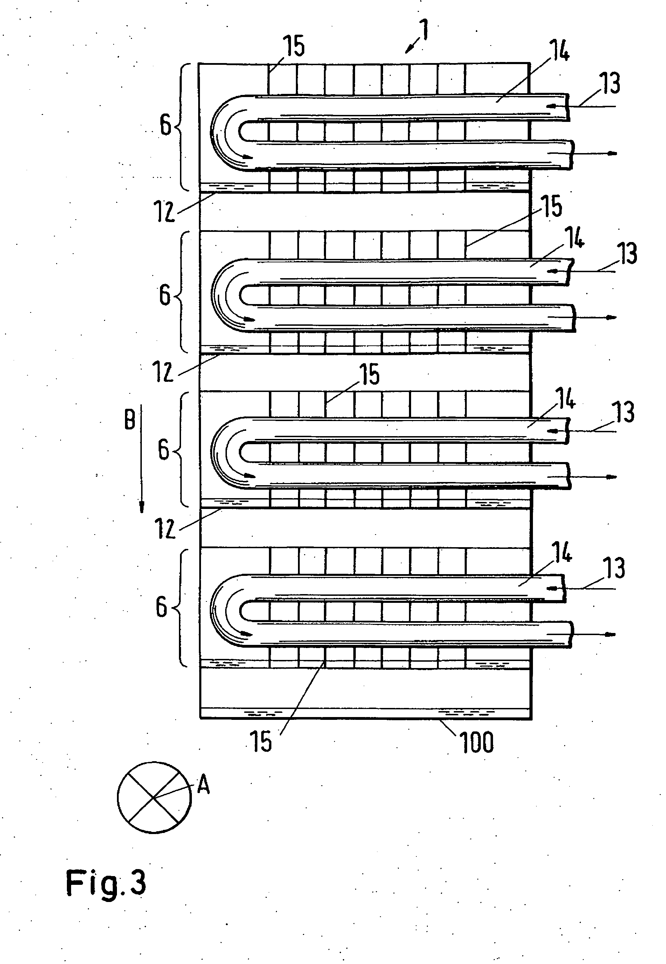

In Fig. 3 ist ein Schnitt entlang der Schnittlinie I-I gemäss Fig. 2 dargestellt, das heisst, Fig. 3 zeigt einen Blick auf dem Ladeluftkühler 1 der Fig. 2 aus Blickrichtung senkrecht zu Richtung A und senkrecht zur Richtung B.

Anhand von Fig. 3 ist besonders gut zu erkennen, wie die Kühlung in den Kühlpakten 6 durch Verwendung der Kühlflüssigkeit 13, die bevorzugt Kühlwasser 13 ist, im Betriebszustand der Hubkolbenbrennkraftmaschine 2 erfolgt. Das Kühlwasser 13 wird in die Kühlleitungen 14 darstellungsgemäss von links aus einem in Fig. 3 nicht dargestellten Kühlwasserreservoir eingeführt, durchläuft das Kühlerpaket 6 und wird auf der darstellungsgemäss linken Seite auch wieder abgeführt, so dass thermisch bedingte Spannungen im Ladeluftkühler 1 vermieden werden.

Es versteht sich, dass in der Praxis in an sich bekannter Weise eine Mehrzahl von Kühlleitungen 14 ein Teilkühlsystem bilden können, so dass die Kühlflüssigkeit 13, bevor sie den Ladeluftkühler 1 wieder verlässt, zur Kühlung der Kühlbleche 15 durch die Mehrzahl von Kühlleitungen 14 des Teilkühlsystems geleitet wird.

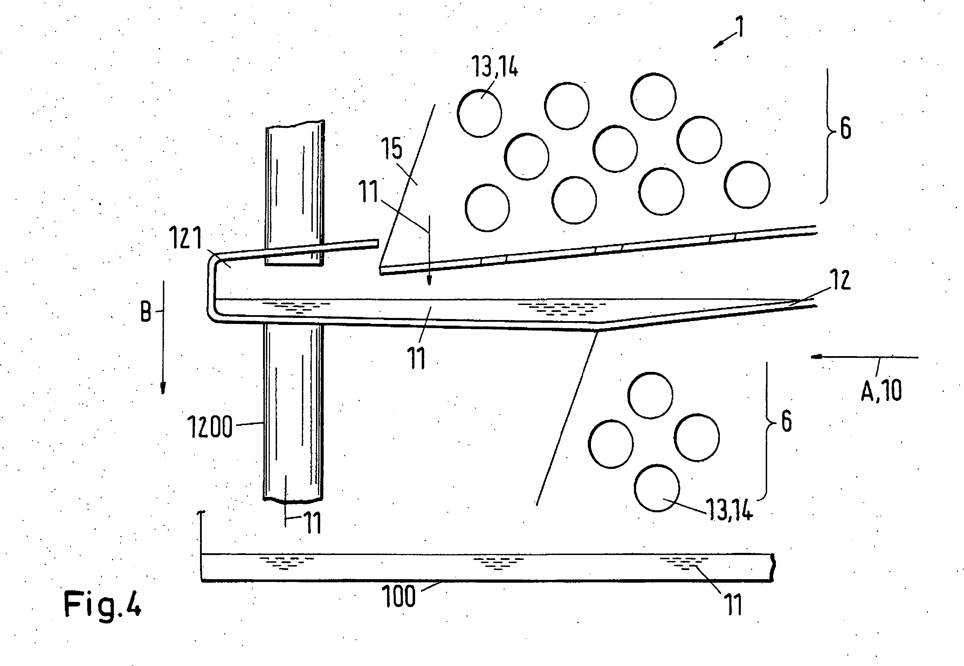

In Fig. 4 ist schematisch ein zweites Ausführungsbeispiel eines erfindungsgemässen Ladeluftkühlers 1 dargestellt, wobei hier die Ablaufeinrichtung 12 als Ablaufwanne 12 ausgestaltet ist, die eine Ablaufrinne 121 aufweist. Aus der Ladeluft 10, die in Richtung A durch den Ladeluftkühler 1 entlang dem Kühlblech 15 strömt, wird Kondenswasser 11 durch Kühlung am Kühlblech 15 flüssig abgeschieden, fliesst unter Wirkung der Schwerkraft in die Ablaufwanne 12, die bevorzugt in Richtung zur Ablaufrinne 121 unter einem vorgebbaren Winkel geneigt ist, und sodann in die Ablaufrinne 121, die mit einem Abflussrohr 1200 verbunden ist, durch das das Kondenswasser 11 in das Sammelbecken 100 abfliessen kann.

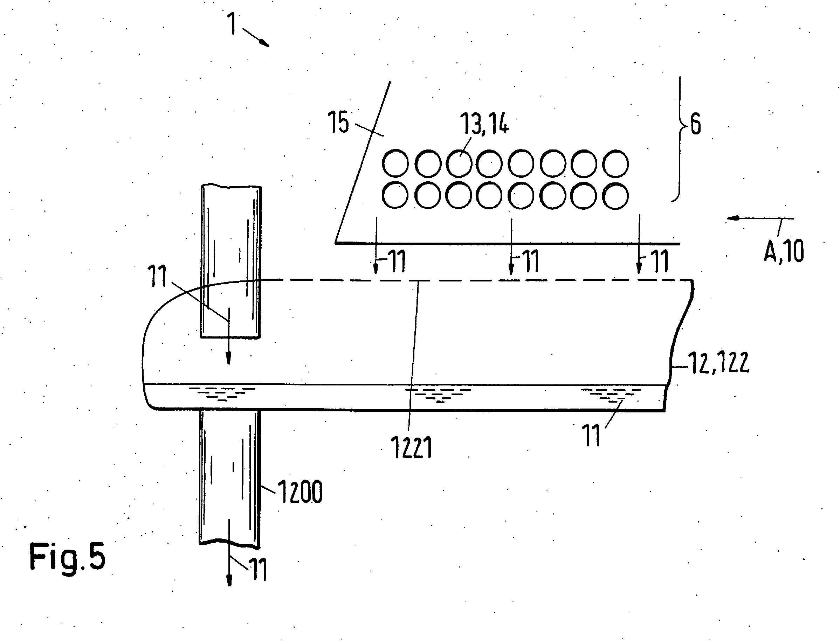

Fig. 5 zeigt ein drittes Ausführungsbeispiel eines erfindungsgemässen Ladeluftkühlers 1, wobei die Ablaufeinrichtung 12 als einseitig perforiertes Hohlblech 122 ausgeführt ist. Das am Kühlblech 15 abgeschiedene Kondenswasser 11 tritt durch die Öffnungen 1221 in das Innere des Hohlblechs 122 und wird dann über das Abflussrohr 1200 nach aussen aus dem Ladeluftkühler 1 abgeführt. Dadurch, dass die Ablaufeinrichtung 12 als Hohlblech 122 ausgeführt ist, kann das einmal in das Innere des Hohlblechs 122 gelangte Kondenswasser 11 nicht mehr von der aus Richtung A mit beträchtlicher Geschwindigkeit durch den Ladeluftkühler 1 strömende Ladeluft 10 erfasst und nicht mehr mitgerissen werden, so dass eine noch bessere Abscheideeffizienz des Kondenswassers 11 erreichbar ist.

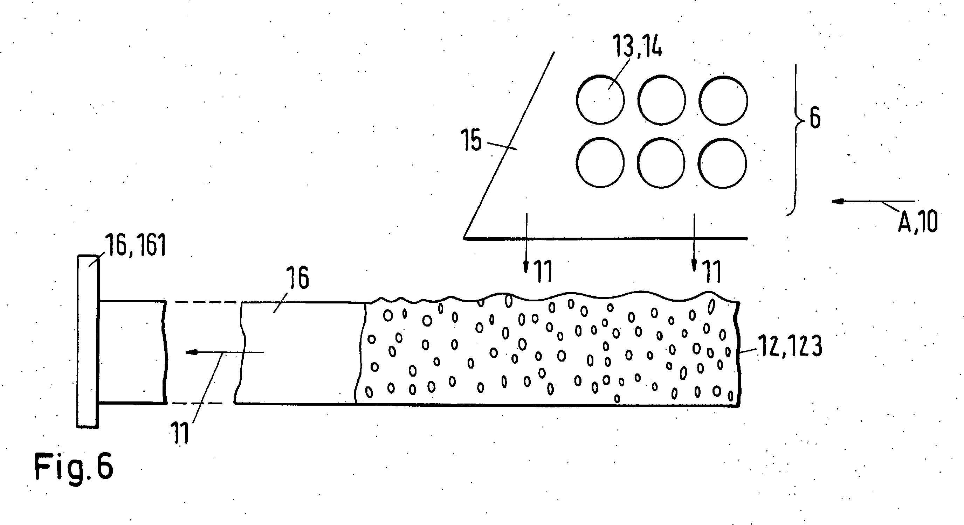

Das zuletzt gesagte trifft auch in besonderem Masse auf das vierte Ausführungsbeispiel gemäss Fig. 6 zu, bei welchem das perforierte Hohlblech 122 durch einen metallischen Ablaufschwamm 123, der natürlich auch aus einem anderen geeigneten Material, z.B. aus einem Kunststoff oder aus einem Verbundwerkstoff gefertigt sein kann, ersetzt ist, der ebenfalls einen guten Schutz gegen die mit hoher Geschwindigkeit durchströmende Ladeluft 10 wie bei Fig. 5 analog beschrieben, bietet. Um das Abführen des Kondenswassers 11 aus dem Ablaufschwamm 123 zu verbessern, ist zur Absaugung des Kondenswassers 11 eine Absaugvorrichtung 16 vorgesehen, die z.B. mit einer Absaugpumpe 161 oder mit dem Eingang 161 des Diffusors 7 verbunden sein kann.

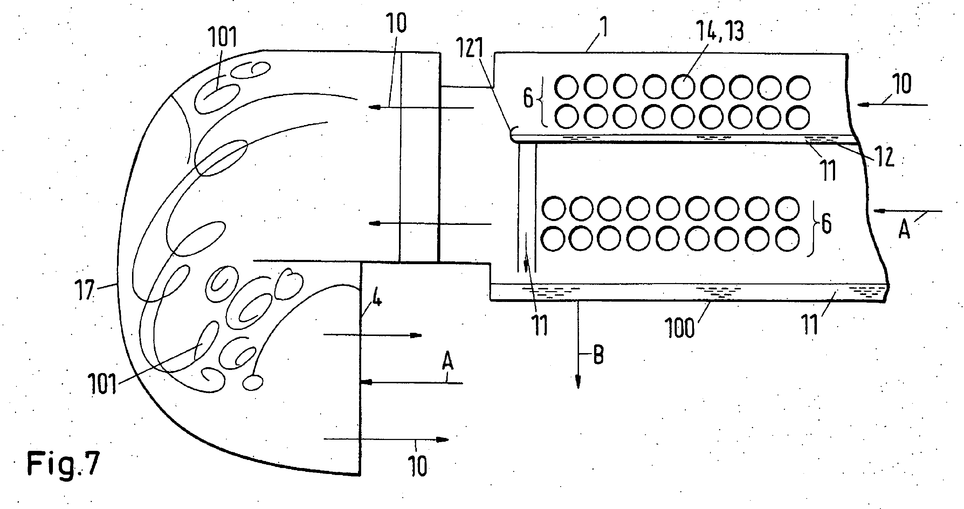

Eine weitere Möglichkeit zur Verbesserung der Effizienz des Abscheidens von Kondenswasser 11 wird durch das in Fig. 7 dargestellte fünfte Ausführungsbeispiel eines erfindungsgemässen Ladeluftkühlers 1 illustriert.

Bei diesem Ausführungsbeispiel umfasst der Ladeluftkühler 1 an seinem Ausgang einen so genannten "Underslung" 17, der im wesentlichen als Umlenkung mit Zyklonwirkung ausgestaltet ist und somit das Abscheiden von Wasser durch Zentrifugalkräfte ermöglicht und den die Ladeluft 10 nach Verlassen des Bereichs, in dem die Kühlpackungen 6 vorgesehen sind, passieren muss, bevor die Ladeluft 10 den Ladeluftkühler 1 durch den Kühlerausgang 4 verlässt und in den in Fig. 7 nicht dargestellten Wasserabscheider 8 einströmt.

Bei einer wie in Fig. 7 dargestellten horizontalen Strömung kann durch Einsatz des Underslungs 17 die Abscheidewirkung weiter verbessert werden. Hier strömt die Ladeluft 10 zunächst horizontal durch den Ladeluftkühler 1, wird dann im Underslung 17, der in an sich bekannter Weise im wesentlichen ein gebogenes Rohr ist, umgelenkt und strömt dann unter dem Ladeluftkühler 1 durch den Wasserabscheider in den Receiver.

Im Underslung 17 werden bevorzugt Ladeluftwirbel 101 erzeugt. Die zu einer weiteren Abscheidung von Kondenswasser 11 im Underslung 17 führen, das dann durch geeignete Einrichtungen, die der Übersichtlichkeit halber in Fig. 7 nicht explizit dargestellt sind, dem Fachmann aber an sich bekannt sind, ebenfalls abgeleitet wird, bevor das Kondenswasser 11 den Wasserabscheider 8 erreichen kann.

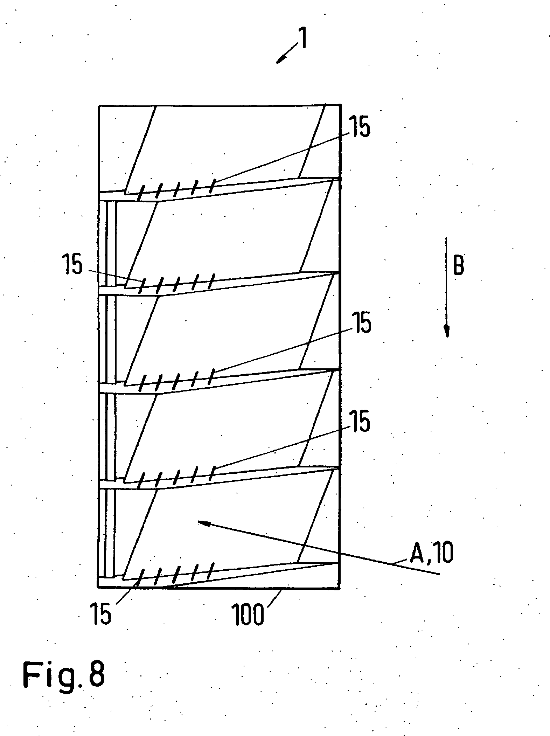

In Fig. 8 ist schliesslich ein Ladeluftkühler 1 mit trapezförmigen Kühlpaketen 6 schematisch dargestellt. Wie bereits oben ausführlich erläutert, wird durch die trapezförmige Ausgestaltung der Kühlerpakete 6 das Austreten des Kondenswassers 11 aus dem Ladeluftkühler 1 weiter reduziert, da das Kondensat in Richtung A, also in horizontaler Richtung, im Ladeluftkühler auf seinem Weg in senkrechter Richtung B einen verlängerte Laufweg hat, so dass sich mehr Kondenswasser 11 bereits im Ladeluftkühler 1 abscheiden lässt.

## Patentansprüche

1. Ladeluftkühler für eine Hubkolbenbrennkraftmaschine (2), insbesondere Zweitakt Grossdieselmotor, wobei der Ladeluftkühler ein sich von einem Kühlereingang (3) zu einem Kühlerausgang (4) entlang einer Längsachse (L) erstreckendes Kühlergehäuse (5) mit einem im Inneren des Kühlergehäuses (5) angeordneten Kühlpaket (6) umfasst, und der Kühlereingang (3) mit einem Ausgang (71) eines Diffusors (7) und der Kühlerausgang (4) mit einem Wasserabscheider (8) der Hubkolbenbrennkraftmaschine (2) verbindbar ist, so dass im Betriebszustand der Hubkolbenbrennkraftmaschine (2) aus einem Abgasturbolader (9) Frischluft (10) als Ladeluft (10) über den Diffusor (7) in den Ladeluftkühler einbringbar ist,
**dadurch gekennzeichnet, dass**
der Ladeluftkühler zur Kühlung der Ladeluft (10) und zum Abscheiden von Kondenswasser (11) aus der Ladeluft (10) mindestens zwei übereinander angeordnete Kühlpakete (6) umfasst, wobei die Ladeluft (10) im Betriebszustand im wesentlichen horizontal durch die Kühlpakete (6) strömt, und die Kühlpakete durch eine Ablaufeinrichtung (12) zur Abführung des Kondenswassers (11) aus dem Ladeluftkühler voneinander getrennt sind.

2. Ladeluftkühler nach Anspruch 1, wobei das Kühlpaket (6) eine von einer Kühlflüssigkeit (13) durchströmte Kühlleitung (14) umfasst.

3. Ladeluftkühler nach einem der Ansprüche 1 oder 2, wobei das Kühlpaket (6) zur Kühlung der Ladeluft (10) und zum Abscheiden von Kondenswasser (11) ein Kühlblech (15) umfasst.

4. Ladeluftkühler nach einem der vorangehenden Ansprüche, wobei die Ablaufeinrichtung (12) als Ablaufblech (12), insbesondere als Ablaufwanne (12), bevorzugt umfassend eine Ablaufrinne (121), ausgebildet ist, so dass das Kondenswasser (11), bevorzugt über die Ablaufrinne (121), aus dem Kühlpaket (6) ausbringbar ist.

5. Ladeluftkühler nach einem der vorangehenden Ansprüche, wobei die Ablaufeinrichtung (12) als zumindest einseitig perforiertes Hohlblech (122) ausgebildet ist.

6. Ladeluftkühler nach einem der vorangehenden Ansprüche, wobei die Ablaufeinrichtung (12) als Ablaufschwamm (123) und / oder Ablaufschaum (123), insbesondere in Form eines metallischen Ablaufschwamms (123) und / oder Ablaufschaums (123) ausgebildet ist.

7. Ladeluftkühler nach einem der vorangehenden Ansprüche, wobei die Ablaufeinrichtung in Bezug auf die Längsachse (L) unter einem vorgebbaren Winkel geneigt ist.

8. Ladeluftkühler nach einem der vorangehenden Ansprüche, wobei zur Absaugung des Kondenswassers (11) aus der Ablaufeinrichtung (12, 122, 123) eine Absaugvorrichtung (16) vorgesehen ist.

9. Ladeluftkühler nach einem der vorangehenden Ansprüche, wobei die Absaugvorrichtung (16) zur Erzeugung eines Unterdrucks mit einem Eingang des Diffusors (7) und / oder die Absaugeinrichtung (16) insbesondere mit einer Saugpumpe (161) verbunden ist.

10. Ladeluftkühler nach einem der vorangehenden Ansprüche, wobei das Kühlergehäuse (5) trapezförmig, insbesondere ausgangsseitig trapezförmig ausgestaltet ist und / oder wobei das Kühlpaket (6) trapezförmig ausgestaltet ist.

## Claims

1. A charge air cooler for a reciprocating piston combustion engine (2), in particular a large two-stroke diesel engine, wherein the charge air cooler includes a cooler housing (5) extending from a cooler inlet (3) to a cooler outlet (4) along a longitudinal axis (L) and with a cooling pack (6) arranged in the interior of the cooler housing (5) and wherein the cooler inlet (3) is connectable to an outlet (71) of a diffuser (7) and the cooler outlet (4) is connectable to a water separator (8) of the reciprocating piston combustion engine (2), so that in the operating state of the reciprocating piston combustion engine (2) fresh air (10) can be introduced as charging air (10) from an exhaust gas turbocharger (9) via the diffuser (7) into the charge air cooler,
**characterised in that**
the charge air cooler includes at least two cooling packs (6) arranged over one another for the cooling of the charging air (10) and for the separating of condensed water (11) from the charging air (10), wherein, in the operating state, the charging air (10) flows essentially horizontally through the cooling packs (6) and the cooling packs are separated from one another by a drain device (12) for the leading away of the condensed water (11) out of the charge air cooler.

2. A charge air cooler in accordance with claim 1, wherein the cooling pack (6) includes a cooling line (14) through which liquid coolant (13) flows.

3. A charge air cooler in accordance with one of the claims 1 or 2 wherein the cooling pack (6) includes a cooling metal sheet (15) for the cooling of the charge air (10) and for the separation of condensed water (11).

4. A charge air cooler in accordance with any one of the previous claims, wherein the drain device (12) is formed as a sheet metal drain (12), in particular as a drain trough (12), preferably including a drain channel (121), so that the condensed water (11) can be brought out of the cooling pack (6), preferably via the drain channel (121).

5. A charge air cooler in accordance with any one of the previous claims, wherein the drain device (12) is formed as a hollow metal sheet (122) perforated at at least one side.

6. A charge air cooler in accordance with any one of the previous claims, wherein the drain device (12) is formed as a drain sponge (123) and/or a drain foam (123), in particular in the form of a metallic drain sponge (123) and/or drain foam (123).

7. A charge air cooler in accordance with any one of the previous claims, wherein the drain device is inclined at a predeterminable angle relative to the longitudinal axis (L).

8. A charge air cooler in accordance with any one of the previous claims, wherein a suction means (16) is provided for sucking the condensed water (11) out of the drain device (12, 122, 123).

9. A charge air cooler in accordance with any one of the previous claims, wherein the suction means (16) for the production of a depression is connected to one inlet of the diffuser (7) and/or the suction means (16) is in particular connected to a suction pump (161).

10. A charge air cooler in accordance with any one of the previous claims, wherein the cooler housing (5) is of trapezoidal shape, in particular trapezoidal at the outlet side and/or wherein the cooling pack (6) is of trapezoidal design.

## Revendications

1. Echangeur thermique intermédiaire pour un moteur à piston à mouvement alternatif (2), en particulier un grand moteur Diesel à deux temps, où l'échangeur thermique intermédiaire comprend un boîtier d'échangeur (5) s'étendant d'une entrée d'échangeur (3) à une sortie d'échangeur (4) le long d'un axe longitudinal (L) avec un paquet de refroidissement (6) disposé à l'intérieur du boîtier d'échangeur (5), et l'entrée d'échangeur (3) peut être reliée à une sortie (71) d'un diffuseur (7) et la sortie d'échangeur (4) à un séparateur d'eau (8) du moteur à piston à mouvement alternatif (2) de sorte qu'à l'état de fonctionnement du moteur à piston à mouvement alternatif (2), à partir d'un turbo-compresseur à gaz d'échappement (9), de l'air frais (10) peut être introduit comme air de chargement (10) par le diffuseur (7) dans l'échangeur thermique intermédiaire,
**caractérisé en ce que** l'échangeur thermique intermédiaire, pour le refroidissement de l'air de chargement (10) et pour la séparation de l'eau de condensation (11) de l'air de chargement (10), comprend au moins deux paquets de refroidissement (6) disposés l'un au-dessus de l'autre, où l'air de chargement (10), à l'état de fonctionnement, s'écoule sensiblement horizontalement à travers les paquets de refroidissement (6), et les paquets de refroidissement sont séparés l'un de l'autre par une installation d'écoulement (12) pour l'évacuation de l'eau de condensation (11) de l'échangeur thermique intermédiaire.

2. Echangeur thermique intermédiaire selon la revendication 1, dans lequel le paquet de refroidissement (6) comprend une conduite de refroidissement (14) traversée par un liquide de refroidissement (13).

3. Echangeur thermique intermédiaire selon l'une des revendications 1 ou 2, dans lequel le paquet de refroidissement (6), pour le refroidissement de l'air de chargement (10) et pour la séparation de l'eau de condensation (11), comprend une tôle de refroidissement (15).

4. Echangeur thermique intermédiaire selon l'une des revendications précédentes, dans lequel l'installation d'écoulement (12) est réalisée comme tôle d'écoulement (12), en particulier comme cuvette d'écoulement (12), comprenant de préférence une rainure d'écoulement (121), de sorte que l'eau de condensation (11) peut être évacuée de préférence par la rainure d'écoulement (121) du paquet de refroidissement (6).

5. Echangeur thermique intermédiaire selon l'une des revendications précédentes, dans lequel l'installation d'écoulement (12) est réalisée comme une tôle creuse (122) perforée au moins sur un côté.

6. Echangeur thermique intermédiaire selon l'une des revendications précédentes, dans lequel l'installation d'écoulement (12) est réalisée comme éponge d'écoulement (123) et/ou mousse d'écoulement (123), en particulier sous la forme d'une éponge d'écoulement métallique (123) et/ou d'une mousse d'écoulement (123).

7. Echangeur thermique intermédiaire selon l'une des revendications précédentes, dans lequel l'installation d'écoulement est inclinée selon un angle prédéfinissable par rapport à l'axe longitudinal (L).

8. Echangeur thermique intermédiaire selon l'une des revendications précédentes, dans lequel est prévu pour l'aspiration de l'eau de condensation (11) de l'installation d'écoulement (12, 122, 123) un dispositif d'aspiration (16).

9. Echangeur thermique intermédiaire selon l'une des revendications précédentes, dans lequel le dispositif d'aspiration (16), pour produire une dépression, est relié à une entrée du diffuseur (7) et/ou l'installation d'aspiration (16) en particulier à une pompe d'aspiration (161).

10. Echangeur thermique intermédiaire selon l'une des revendications précédentes, dans lequel le boîtier d'échangeur (5) est réalisé en forme de trapèze, en particulier au côté sortie en forme de trapèze et/ou où le paquet de refroidissement (6) est réalisé en forme de trapèze.
